# FASCICULE DE BREVET EUROPEEN

(11) **EP 0 631 076 B1**
(45) Date de publication et mention de la délivrance du brevet: **07.04.1999**
(21) Numéro de dépôt: 94401329.1
(22) Date de dépôt: 14.06.1994
(51) Int. Cl.: F16K 31/06, F02M 51/06, H01F 7/16

(54) **Electrovanne à noyau métallique tubulaire**
Elektromagnetisches Ventil mit rohrförmigem metallischem Kern
Electromagnetic valve with tubular metallic core

(30) Priorité: 16.06.1993 FR 9307250
(43) Date de publication de la demande: 28.12.1994
(73) Titulaire: SAGEM ALLUMAGE Société Anonyme, 75783 Paris Cédex 16 (FR)
(72) Inventeur: Dolle, Pascal, F-63500 Issoire (FR)
(74) Mandataire: Geismar, Thierry

(56) Documents cités:
- EP-A- 0 128 646
- CH-A- 484 497
- DE-B- 1 272 665
- FR-A- 2 276 472

## Description

La présente invention concerne une électrovanne à noyau métallique tubulaire et plus particulièrement une telle électrovanne comportant une bobine électromagnétique enroulée sur le moyeu d'un bobinot en matière plastique, un noyau métallique central disposé dans le moyeu du bobinot, ledit noyau formant un conduit axial, et une armature susceptible d'être déplacée par les forces électromagnétiques axialement en direction d'une extrémité dudit conduit axial en vue de commander l'écoulement de gaz dans ledit conduit, un filetage étant formé à la surface extérieure du noyau en vue du réglage de la position axiale du noyau par rapport à l'armature. Une telle électrovanne est connue du document DE-A-1 272 665.

De telles électrovannes sont notamment utilisées dans les systèmes d'alimentation en mélange combustible des moteurs à combustion interne.

Dans ces dispositifs, la bobine est alimentée en courant haché de rapport cyclique pouvant varier de 0 à 100 %, de manière à faire varier la distance entre l'armature, supportant généralement un joint d'étanchéité, et l'extrémité du noyau central tubulaire. Ceci a pour effet de déterminer le débit de la vanne pour une valeur donnée de la pression différentielle régnant de part et d'autre de la vanne.

On comprend par conséquent qu'un problème critique de ce type d'électrovanne réside dans le réglage de la distance au repos entre l'armature et l'extrémité du conduit axial. Jusqu'à présent, cette distance était déterminée grâce à une grande précision dans l'usinage et le montage des différentes pièces de l'électrovanne. Il en résultait des coûts élevés.

On a également proposé dans le document DE-A-1 272 665 de former un filetage à la surface intérieure du noyau, en vue du réglage de sa position axiale. Rien n'est toutefois prévu en vue du blocage de ce réglage.

La présente invention vise à pallier cet inconvénient en fournissant une électrovanne du type rappelé ci-dessus, ne nécessitant pas d'usinage particulièrement précis et dont le réglage soit facile et rapide à réaliser.

A cet effet, l'invention a tout d'abord pour objet une électrovanne selon la revendication 1.

De préférence, le noyau est muni de moyens permettant de l'entraîner en rotation par rapport au bobinot depuis l'extérieur de l'électrovanne.

Grâce à l'invention, le réglage de la distance entre l'armature et l'extrémité du conduit axial s'effectue par conséquent en réglant la position axiale du noyau central par simple vissage ou dévissage. Lorsque le noyau est simplement surmoulé par la matière plastique du bobinot, et forme donc un insert à l'intérieur du moyeu de ce dernier, la première mise en rotation du noyau par rapport au bobinot a pour effet de rompre la liaison existant entre le métal et la matière plastique. La poursuite de la rotation provoque le déplacement axial du noyau par rapport au bobinot, le filetage du noyau ayant pour effet de tarauder la surface intérieure du moyeu. Du fait de ce taraudage, le noyau reste fermement maintenu à l'intérieur du moyeu du bobinot, de sorte que lorsque le réglage convenable est obtenu il n'est pas nécessaire de fixer autrement le noyau.

Dans un mode de réalisation particulier, l'électrovanne selon l'invention comporte un circuit magnétique de retour de flux en forme de U, ladite armature étant agencée pour se déplacer entre les branches du U.

Dans les électrovannes de l'art antérieur, les branches du U étaient évasés vers leur extrémité et l'armature s'étendait au-dessus de ces branches en s'en rapprochant progressivement lorsque l'armature se rapprochait du noyau. Dans une telle disposition, l'entrefer entre le noyau et l'armature participait à l'effort électromagnétique exercé sur l'armature mais induisait des dispersions d'une vanne à l'autre, du fait de l'empilement axial des tolérances.

En revanche, dans l'électrovanne de l'invention, du fait que l'armature est disposée entre les branches du U, les seules tolérances à respecter sont des tolérances radiales, beaucoup moins difficiles à respecter. On ne rencontre pas par ailleurs de dispersion affectant les performances du fait que l'on peut régler finement l'entrefer central, fonctionnel et moteur, entre l'armature et le noyau.

L'invention a également pour objet un procédé selon la revendication 4 de fabrication et de réglage d'une électrovanne.

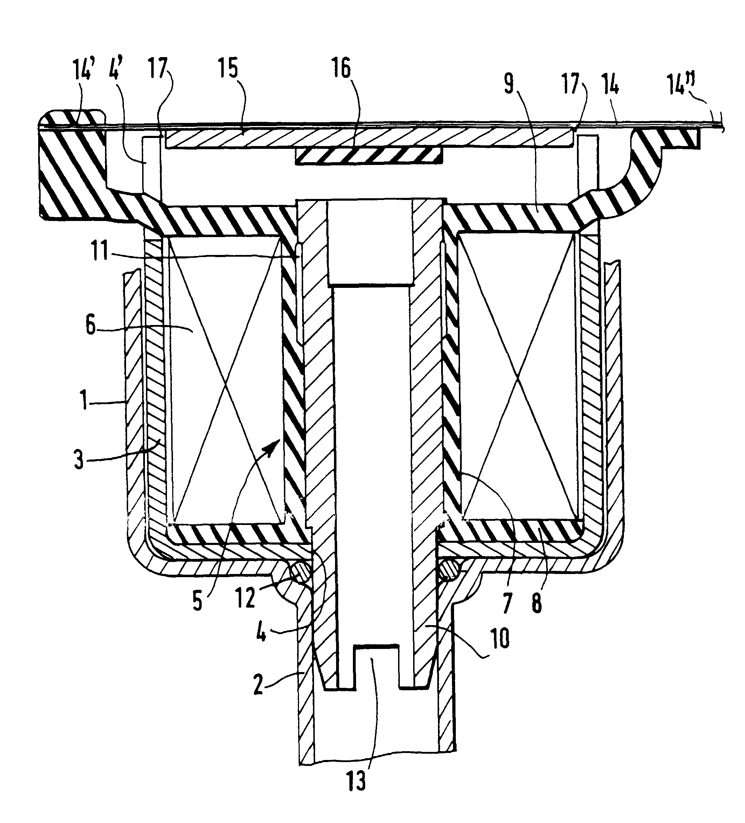

On décrira maintenant à titre d'exemple non limitatif un mode de réalisation particulier de l'invention, en référence à la figure unique qui est une vue partielle en coupe axiale d'une électrovanne selon l'invention.

Les organes de cette électrovanne sont disposées à l'intérieur d'un boîtier 1 formant sensiblement une cuve cylindrique dont le fond présente une ouverture prolongée par un conduit d'évacuation 2. Le dessus de la cuve 1 est fermé par un couvercle (non représenté), monté de toute manière convenable, et muni d'un conduit d'arrivée de gaz.

Une pièce 3 est placée à l'intérieur de la cuve 1. Cette pièce 3 est formée d'une plaque en matériau magnétique recourbée en forme d'un U dont la partie centrale est percée d'un trou 4 et dont l'extrémité de chaque branche comporte une fente 4'.

A l'intérieur de la pièce 3 est disposé un bobinot 5 en matière plastique sur lequel est enroulée une bobine 6. Ce bobinot 5 est formé d'un moyeu 7 et de deux flasques d'extrémité 8 et 9.

Un noyau formant un conduit tubulaire 10 en matériau magnétique est disposé coaxialement à l'intérieur du moyeu 7. Il est muni d'un filetage 11. Le bobinot 5 est surmoulé sur le conduit 10, de sorte que la matière plastique de ce bobinot pénètre dans les filets du filetage 11.

Le conduit tubulaire traverse le trou 4 formé dans la partie centrale de l'armature 3 et pénètre à l'intérieur du conduit d'évacuation 2. Un joint 12 assure l'étanchéité entre l'extérieur du conduit 10 et l'intérieur du conduit 2.

L'extrémité du conduit 10 engagée dans le conduit 2 comporte des fentes 13 permettant de faire pivoter le conduit 10 autour de son axe à l'aide d'un outil engagé dans le conduit 2.

Une lame élastique métallique 14 est montée au-dessus de l'ensemble qui vient d'être décrit avec une de ses extrémités 14' fixe par rapport à cet ensemble et une extrémité 14'' susceptible de coulisser parallèlement à elle-même afin de permettre à la lame 14 de fléchir.

Cette lame 14 porte, de son côté faisant face à l'extrémité du conduit 10 qui est opposée à celle qui porte les fentes 13, une armature 15 également réalisée dans un matériau magnétique et portant un joint d'étanchéité 16 en vis-à-vis de l'ouverture du conduit 10.

En position de repos, la lame 14 est rectiligne et s'étend sensiblement perpendiculairement à l'axe du conduit 10 et, en fonctionnement, lorsqu'elle est fléchie en direction du noyau 10, l'armature se déplace entre les branches de la pièce 3, perpendiculairement à ces branches, en formant deux entrefers 17 de très faible épaisseur.

Le montage de cette électrovanne s'effectue de la manière suivante.

Le bobinot 5 est tout d'abord surmoulé sur le conduit tubulaire 10, puis l'enroulement 6 est bobiné sur ce bobinot. La pièce 3 et la bobine ainsi formée sont alors introduites dans la cuve 1 avec interposition du joint 12. Enfin, la lame 14 portant l'armature 15 et le joint 16 sont mis en place et le couvercle de la vanne est fermé.

Le réglage s'effectue en introduisant un outil à l'intérieur du conduit 2, de manière à faire pivoter le conduit 10. Ce pivotement provoque tout d'abord une rupture de la liaison entre la matière plastique du bobinot 5 et le métal du conduit 10, puis un déplacement de ce dernier vers le haut en direction de l'armature 15. Lorsque le réglage convenable est atteint, ce qui peut être déterminé par tout moyen convenable, la distance entre l'ouverture d'extrémité du conduit et l'armature 15 a la valeur souhaitée et l'outil est retiré.

Aucune autre opération n'est nécessaire pour le réglage de cette électrovanne.

## Revendications

1. Electrovanne comportant une bobine électromagnétique (6) enroulée sur le moyeu d'un bobinot (5) en matière plastique, un noyau métallique central (10) disposé dans le moyeu (7) du bobinot, ledit noyau formant un conduit axial, et une armature (15) susceptible d'être déplacée par les forces électromagnétiques axialement en direction d'une extrémité dudit conduit axial en vue de commander l'écoulement de gaz dans ledit conduit, un filetage (11) étant formé à la surface extérieure du noyau en vue du réglage de la position axiale du noyau par rapport à l'armature, caractérisé par le fait que ledit filetage coopère avec la surface intérieure dudit moyeu, le bobinot étant surmoulé sur le noyau.

2. Electrovanne selon la revendication 1, dans laquelle le noyau est muni de moyens (13) permettant de l'entraîner en rotation par rapport au bobinot depuis l'extérieur de l'électrovanne.

3. Electrovanne selon l'une quelconque des revendications 1 et 2, comportant un circuit magnétique (3) de retour de flux en forme de U, ladite armature étant agencée pour se déplacer entre les branches du U.

4. Procédé de fabrication et de réglage d'une électrovanne comportant une bobine électromagnétique (6) enroulée sur le moyeu d'un bobinot (5) en matière plastique, un noyau métallique central (10) disposé dans le moyeu (7) du bobinot, ledit noyau (10) formant un conduit axial et possédant un filetage (11) à sa surface extérieure, et une armature (15) susceptible d'être déplacée par les forces électromagnétiques axialement en direction d'une extrémité dudit conduit axial en vue de commander l'écoulement de gaz dans ledit conduit, caractérisé par le fait qu'il comprend les étapes consistant à :
- surmouler ledit bobinot (5) sur le noyau (10) de manière que la matière plastique du bobinot adhère à la surface extérieure du noyau en pénétrant dans ledit filetage ;
- monter l'électrovanne ;
- rompre la liaison entre le bobinot et le noyau en faisant tourner le noyau autour de son axe par rapport au bobinot ;
- régler la position axiale du noyau en poursuivant son mouvement de rotation.

## Patentansprüche

1. Elektromagnetisches Ventil, aufweisend
eine elektromagnetische Spule (6), die auf die Nabe einer Hülse (5) aus Kunststoff aufgewickelt ist,
einen metallischen Zentralkern (10), der in der Nabe (7) der Hülse angeordnet ist, wobei der Zentralkern einen axialen Kanal bildet, und einen Anker (15), der von den elektromagnetischen Kräften axial in Richtung eines Endes des axialen Kanals ausgelenkt werden kann, um die Gasströmung in dem Kanal zu steuern, wobei an der Außenfläche des Zentralkerns ein Gewinde (11) zur Einstellung der Axialposition des Kerns relativ zum Anker ausgebildet ist, **dadurch gekennzeichnet,**
daß das genannte Gewinde mit der Innenfläche der Nabe zusammenwirkt, wobei die Hülse auf den Kern aufgeformt ist.

2. Elektromagnetisches Ventil nach Anspruch 1, wobei der Kern mit Mitteln (13) versehen ist, die dessen Drehantrieb relativ zur Hülse von der Ventil-Außenseite aus ermöglichen.

3. Elektromagnetisches Ventil nach einem der Ansprüche 1 und 2, wobei ein magnetischer Rückflußkreis (3) in Form eines U vorgesehen ist, wobei der Anker zwischen den Schenkeln des U beweglich angeordnet ist.

4. Verfahren zur Herstellung und Steuerung eines elektromagnetischen Ventils, aufweisend
eine elektromagnetische Spule (6), die auf die Nabe einer Hülse (5) aus Kunststoff aufgewickelt ist, einen metallischen Zentralkern (10), der in der Nabe (7) der Hülse angeordnet ist, wobei der Zentralkern einen axialen Kanal bildet und an seiner Außenfläche ein Gewinde (11) aufweist, und einen Anker (15), der von den elektrischen Kräften axial in Richtung eines Endes des axialen Kanals ausgelenkt werden kann, um die Gasströmung in dem Kanal zu steuern, gekennzeichnet durch die folgenden Verfahrensschritte:
Anformen der Hülse (5) an den Kern (10) derart, daß der Kunststoff der Hülse auf der Außenfläche des Kerns unter Eindringen in dessen Außengewinde haftet;
Montieren des elektromagnetischen Ventils;
Unterbrechen der Verbindung zwischen der Hülse und dem Kern, wobei der Kern relativ zur Hülse um seine Achse gedreht wird;
Einstellen der Axialposition des Kerns nach Maßgabe der Drehbewegung.

## Claims

1. Electromagnetic valve consisting of an electromagnetic coil (6) wound on the hub of a reel (5) of plastic material, a central metallic core (10) located in the hub (7) of the reel, the said core forming an axial conduit and an armature (15) susceptible to being axially displaced by the electromagnetic forces in the direction of one extremity of the axial conduit with a view to controlling the flow of gas in that conduit, a thread (11) having been formed on the external surface of the core with a view to regulating the axial position of the core in relation to the armature, characterised by the fact that the aforementioned thread works together with the interior surface of the aforementioned hub, the reel being moulded on to the core.

2. Electromagnetic valve in accordance with claim 1, in which the core is equipped with means (13) permitting its rotation in relation to the reel forme the exterior of the electromagnetic valve.

3. Electromagnetic valve in accordance with claims 1 and 2, consisting of a magnetic circuit (3) with a flux return circuit in the form of a U, the aforementioned armature being arranged to position itself between the branches of the U.

4. Procedure of manufacture and control of an electromagnetic valve consisting of an electromagnetic coil (6) wound on the hub of a reel (5) of plastic material, a central metallic core (10) located in the hub (7) of the reel, the said core (10) forming an axial conduit and possessing a thread (11) on its external surface and an armature (15) susceptible to being axially displaced by the electromagnetic forces in the direction of an extremity of the axial conduit with a view to controlling the flow of gas in that conduit, characterised by the fact that it includes stages consisting of :
- moulding the aforementioned reel (5) on the core (10) in a way that the plastic material of the reel adheres to the external surface of the core in penetrating into the aforementioned thread.
- the assembly of the electromagnetic valve.
- breaking the connection between the reel and the core by turning the core around its axis in relation to the reel.
- the control of the actual position of the core in accordance with its movement of rotation.
